# EUROPÄISCHE PATENTSCHRIFT

(11) **EP 1 753 820 B1**
(45) Veröffentlichungstag und Bekanntmachung des Hinweises auf die Patenterteilung: **04.03.2009**
(21) Anmeldenummer: 05754530.3
(22) Anmeldetag: 08.06.2005
(51) Int. Cl.: C08L 67/06, C08L 67/07, C09D 167/06, C09D 167/07, H02K 3/30, H02K 3/44, H01B 3/42

(54) **TRÄNKHARZFORMULIERUNG**
IMPREGNATING RESIN FORMULATION
FORMULATION DE RESINE IMPREGNATRICE

(30) Priorität: 11.06.2004 DE 102004028417
(43) Veröffentlichungstag der Anmeldung: 21.02.2007
(73) Patentinhaber: Altana Electrical Insulation GmbH, 46483 Wesel (DE)
(72) Erfinder: TÖDTER-KÖNIG, Sascha, 22763 Hamburg (DE); HEGEMANN, Günter, 22391 Hamburg (DE); ABENDROTH, Mark, 22453 Hamburg (DE); LIENERT, Klaus-W., 22763 Hamburg (DE)
(74) Vertreter: Fitzner, Uwe
(86) Internationale Anmeldenummer: PCT/EP2005/052703
(87) Internationale Veröffentlichungsnummer: WO 2005/121246

(56) Entgegenhaltungen:
- DE-A1- 19 939 759
- US-A- 4 163 093
- US-A- 4 274 992
- US-A- 5 270 104
- US-A- 5 298 314
- US-A1- 2002 082 314
- DATABASE WPI Section Ch, Week 199719 Derwent Publications Ltd., London, GB; Class A18, AN 1997-209364 XP002340201 & JP 09 059329 A (NIPPON SYNTHETIC CHEM IND CO) 4. März 1997 (1997-03-04)

## Beschreibung

Die vorliegende Erfindung betrifft eine Tränkharzformulierung für Elektromaschinen.

Die Tränkung von elektrischen Wicklungen ist ein Standardvorgang bei der Herstellung von Elektromaschinen. Das ausgehärtete Tränkharz hat die Aufgabe, die Wicklung mechanisch zu fixieren, vor aggressiven Chemikalien und Umwelteinflüssen zu schützen, die gebildete Wärme abzuleiten und elektrisch zu isolieren.

Stand der Technik ist die Verwendung von styrolhaltigen ungesättigten Polyestern. Diese sind allgemein bekannt, und deren Herstellung und Verwendung ist dem Fachmann geläufig. Literatur ist in den üblichen Werken zur Polymerchemie und den Broschüren der Lieferanten zu finden. Außerdem gibt es Tagungsberichte zu konventionell verarbeitbaren (z.B. Varnish and resin usage with various motor construction, M. Winkeler, IEEE Proceedings, 1999, S. 143; Evaluation of electrical insulating resins for inverter duty application, M. Winkeler, IEEE Proceedings 1997, S 145), sowie zu z.B. kalthärtenden Systemen (Heatless cure coating of electrical windings, Th. J. Weiss, IEEE Proceedings, 1993, S. 443).

Da styrolhaltige Harze bei der Härtung Styrol emittieren, muß die Abluft aus den Verarbeitungsanlagen behandelt werden. Werden statt Styrol andere Comonomere, z.B. Vinyltoluol oder verschiedene Acrylate verwendet, ändert sich an den Emissionen prinzipiell nichts. Es hat daher den Ansatz gegeben, comonomerenfreie ungesättigte Polyesterharze zu entwickeln, die für den Einsatz zur Imprägnierung von elektrischen Wicklungen geeignet sind.

In der EP 0 968 501 werden flüssige comonomerenfrei härtbare ungesättigte Polyester enthaltende Formulierungen beschrieben, die auch UV-härtbar sind. Der ungesättigte Polyester enthält Dicyclopentadien- und Maleinsäurestrukturen. Allerdings haben diese Formulierungen eine relativ hohe Viskosität (höher als 2600 mPas). Diese ist für die Verarbeitung auf gängigen Anlagen ein Hindernis.

In der EP 1 122 282 werden ebenfalls comonomerenfrei härtbare ungesättigte Polyesterharze enthaltende Formulierungen beschrieben. Sie bestehen aus ungesättigten Polyestern auf Basis von Maleinsäure und Dicyclopentadien und polymeren Vernetzern, in denen z.B. Isoprenol (3-Methyl-3-buten-1-ol) als Baustein eingesetzt wird. Die Viskositäten der Harzmischungen sind teilweise sehr hoch. Außerdem haben die Formulierungen den Nachteil, daß Harze und polymere Vernetzer nicht beliebig gemischt werden können, da der polymere Vernetzer für sich allein nicht härtbar ist.

Die vorliegende Erfindung hat sich zur Aufgabe gestellt, eine niedrigviskose, ein comonomerenfreies ungesättigtes Polyesterharz enthaltende Formulierung zu entwickeln, die frei von allein nicht härtenden polymeren Vernetzern ist und die zur Imprägnierung von elektrischen Wicklungen geeignet ist.

Diese Aufgabe wird gelöst durch eine niedrigviskose Tränkharzformulierirng enthaltend eine Komponente A, enthaltend ein allyletherhaltiges ungesättigtes Polyesterharz,
eine Komponente B, enthaltend ein von Komponente A verschiedenes, dicyclopentadienterminiertes, ungesättigtes Polyesterharz,
eine Komponente C, enthaltend ein weiteres von den Polyesterharzen gemäß Komponenten A und B verschiedenes, ungesättigtes Polymer,
sowie ggf. Härtern, Beschleunigern, Stabilisatoren, Additiven und Rheologieadditiven.

Die Tränkharzformulierungen im Rahmen der vorliegenden Erfindung weisen eine Viskosität von kleiner oder gleich 1500 mPas gemessen bei 25°C auf.

Vorzugsweise kann die Tränkharzformulierung aus den Komponenten A, B, C, sowie den üblichen Härtern, Beschleunigern, Stabilisatoren und Additiven, Rheologieadditiven, bestehen.

Besonders bevorzugte Tränkharzformulierungen weisen eine Viskosität zwischen einschließlich 600 und einschließlich 1300 mPas, insbesondere bevorzugt zwischen einschließlich 850 und einschließlich 1200 mPas, gemessen bei 25°C auf.

Die in Komponente A vorhandenen allyletherhaltigen ungesättigten Polyesterharze enthalten vorzugsweise ein ungesättigtes Polyesterharz oder eine Mischung von ungesättigten Polyesterharzen, die aufgebaut sind aus Trimethylolpropanmono- und/oder Trimethylolpropandiallylether, Glykolen, Maleinsäure, sowie anderen aus der Polyesterharze können erfindungsgemäß modifiziert sein mit Imidstrukturen, Dicyclopentadienstrukturen, mit Isocyanaten und/oder Melaminharzen.

Diese Harze sind bekannt (siehe z.B. die Broschüre Nr. 0207 der Firma Perstorp, DE 2645657, DOS 2113998) und können durch die Reaktion von Allylethern, Polyolen, Carbonsäuren und auch monofunktionellen Molekülen als Kettenabbrecher hergestellt werden.
Die Herstellung dieser Harze ist ebenfalls allgemein bekannt. Dabei werden die Komponenten mit oder ohne Veresterungskatalysator üblicherweise auf Temperaturen zwischen 160 und 200°C erhitzt. Die Reaktion wird üblicherweise unter Schutzgas durchgeführt. Um die Austragung des gebildeten Wassers zu erleichtern kann ein Azeotrop und/oder Vakuum verwendet werden. Die Kontrolle des Kondensationverlaufs wird üblicherweise durch die Bestimmung der Säurezahl und/oder der Kondensationsviskosität durchgeführt.

Als Allylether können Trimethylolpropanmono-, Trimethylolpropandi-, Pentaerythrittriallyether eingesetzt werden. Bevorzugt sind alle drei, allein oder in verschiedenen Abmischungen.

Als Polyole werden Ethylenglykol, Di- und Triethylenglykol, Neopentylglykol, 1,3- und 1,6-Hexandiol, Perhydrobisphenol-A, Glycerin, Trimethylolpropan, Tris-(2-Hydroxyethyl)-Isocyanurat, Pentaerythrit, Dipentaerythrit. Bevorzugt werden Di- und Triethylenglykol, Neopentylglykol und Trimethylolpropan.

Als Carbonsäuren werden verwendet alpha,beta-ungesättigte Dicarbonsäuren oder - Derivate wie Maleinsäurenahydrid und Fumarsäure und ihre Abmischungen mit modifizierenden Dicarbonsäuren wie Adipinsäure, Bernsteinsäure, Phthalsäureanhydrid, Isophthalsäure, Terephthalsäure, 2,6-Naphthalindicarbonsäure. Bevorzugt werden Maleinsäureanhydrid und Adipinsäure.

Als Kettenabbrecher werden monofunktionelle Carbonsäuren und/oder monofunktionelle Alkohole verwendet, z.B. Tallölfettsäure, Benzoesäure, 2-Ethylhexansäure, Hexanol, 2-Ethylhexanol, Benzylalkohol, tert-Butanol, Isoprenol (3-Methyl-3-buten-1-ol), das Reaktionsprodukt von Tetrahydrophthalsäureanhydrid mit Ethanolamin. Bevorzugt werden Hexanol, Isoprenol sowie das Reaktionsprodukt von Tetrahydrophthalsäureanhydrid mit Ethanolamin.

Erfindungsgemäß kann die Komponente B aus mindestens einem von Komponente A verschiedenen Bindemittel bestehen, das in der EP 0 968 501 und /oder in der EP 1 122 282 beschrieben wird.

Das in Komponente B vorhandene ungesättigte von Komponente A verschiedene Polyesterharz mit Dicyclopentadienstrukturen, kann z.B. durch die Addition von Maleinsäure und Dicyclopentadien, Glykolen, Maleinsäure, sowie anderen aus der ungesättigten Polyesterharzchemie bekannten Komponenten hergestellt werden.

Erfindungsgemäß kann die Komponente C ein handelsübliches ungesättigtes Polymer enthalten. Diese Polymere sind unter Handelsnamen wie Laromer PO 33F, Sartomer SR 9045 oder Sartomer CD 9021 oder Polyethylenglycoldivinylether im Handel erhältlich.

Das in Komponente C vorhandene ungesättigte Polymere kann durch die Funktionalisierung bestehender Polymere mit Doppelbindungen enthaltenden Molekülen hergestellt werden, wie zum Beispiel das Reaktionsprodukt aus einem carbonsäureterminierten Polyacrylat mit Glycidylmethacrylat, oder eines Polyetherpolyols mit einem ungesättigten Isocyanat. Außerdem können polymere Vinylether, wie zum Beispiel Polyethylenglykoldivinylether unterschiedlichen Molekulargewichts eingesetzt werden.

Die erfindungsgemäße Tränkharzformulierung kann
1. 40 - 95 Gew.-% allyetherhaltiges ungesättigte Polyesterharz (Komponente A), bevorzugt 50,0 - 90 Gew.-%, besonders bevorzugt 60 - 80 Gew.-%
2. 5,0 - 60 Gew.-% dicycopentadienterminiertes ungesättigte Polyesterharz (Komponente B), bevorzugt 8,0 - 40 Gew.-%, besonders bevorzugt 10 - 30 Gew.-%
3. 1,0 - 30 Gew.-% ungesättigtes Polymer (Komponente C), bevorzugt 1,0 - 20 Gew.-%, besonders bevorzugt 1,0 -10 Gew.-%
4. 0,1 - 5 Gew.-% Härtern, Beschleunigern, Stabilisatoren, Additiven, Rheologieadditiven, bevorzugt 0,5 -4 Gew.-%, besonders bevorzugt 1 - 3 Gew.-%
enthalten, wobei die prozentualen Angaben jeweils auf die komplette Tränkharzformulierung bezogen sind.

Vorzugsweise kann die erfindungsgemäße Formulierung aus diesen Komponenten bestehen.

Erfindungsgemäß werden die drei Komponenten A, B, C vorzugsweise zunächst gemischt und mit den üblichen Härtern, Beschleunigern, Stabilisatoren und Additiven formuliert. Dadurch erhält man Formulierungen, die abhängig von der Zusammensetzung niedrige Viskosität, ein gutes Härtungsverhalten und gehärtet homogene Formstoffe mit hervorragenden mechanischen, elektrischen und thermischen Eigenschaften.

Die erfindungsgemäße Tränkharzformulierung wird demgemäß vorzugsweise durch Abmischen der Komponenten A, B und C hergestellt, während die Zusätze an Härtern, I Beschleunigern, Stabilisatoren, Additiven, Rheologieadditiven vorzugsweise am Ende zugegeben werden.

Als Härter haben sich Peroxide bewährt, wie z.B. Dicumylperoxid und tert.-Butylperbenzoat sowie silylierte Benzpinakole. Durch die Verwendung von Photoinitiatoren, wie zum Beispiel Phosphinoxiden und Ketalen kann die Formulierung UV-lichthärtend eingestellt werden.
Beschleuniger sind Metallseifen, wie z.B. Kobalt-, Vanadium und Zirkonoktoate oder Naphthenate.
Als Stabilisatoren werden alkylierte Phenole, Hydrochinone und Benzochinone, wie z.B. 2,4-Ditert.-butylphenol oder Methylhydrochinon verwendet. Additive sind die dem Fachmann bekannten Verlaufs und Oberflächenadditive.
Als rheologische Zusätze haben sich pyrogene Kieselsäuren, Bentone und polymere Harnstoffe bewährt. Es sei hiermit auf die Lackhandbücher verwiesen.

Die erfindungsgemäße Tränkharzformulierung ist bei Raumtemperatur flüssig, niedrigviskos und comonomerenfrei. Sie läßt sich auf den üblichen Verarbeitungsanlagen verarbeiten, z. B. durch Tauchen, Träufeln, Tauchrollieren, Gießen und durch Vakuum- und Vakuum-Druckimprägnierung von elektrischen Wicklungen.

Im Anschluß an die beschriebene Verarbeitung der Tränkharzformulierung wird gehärtet. Hierbei kann es sich um eine thermische Härtung handeln. Diese kann entweder in einem Ofen oder durch die Stromwärme der Wicklung oder durch die Kombination dieser Möglichkeiten erreicht werden.

Die Härtung kann auch mittels Strahlung, vorzugsweise mittels UV-Strahlung, erreicht werden. Insbesondere, wenn die Tränkharzformulierung mit einem Photoinitiator versehen ist, kann sie auf dem Blechpaket mit Hilfe von UV-Licht gehärtet werden. Möglich ist erfindungsgemäß auch die Kombination von thermischer Härtung und UV-Licht-Härtung, insbesondere, wenn eine Härtung direkt auf dem Blechpaket vorgesehen ist. Dadurch wird zusätzlich die gleichzeitige Nutzung von Stromwärme und UV-Licht für die Härtung ermöglicht.

Neben der Imprägnierung von elektrischen Wicklungen kann die erfindungsgemäße Tränkharzformulierung auch zum Überzug von Flachbaugruppen in der Elektronik, Hybriden, SMD-Baugruppen, und bestückten Leiterplatten eingesetzt werden, oder als Basismaterial für flächige Isolierstoffe verwendet werden.

Im folgenden wird die Erfindung unter Bezugnahme auf Beispiele näher beschrieben. Die Ausprüfung erfolgt nach DIN und IEC-Normen.

### 1 Beispiele

### Beispiel 1 Herstellung eines allylethermodifizierten ungesättigten Polyesterharzes 1

In einer Standard Dreihalskolbenapparatur werden unter Schutzgas 290 g Maleinsäureanhydrid, 114 g Triethylengykol, 320 g 2-Ethylhexanol, 190 Trimethylolpropandialllyether und 70 g Glycerin miteinander bei 190°C reagiert. Die Säurezahl des erhaltenen Harzes beträgt 20 mg KOH/g und die Viskosität 20 Pas.

### Beispiel 2 Herstellung eines allylethermodifizierten ungesättigten Polyesterharzes 2

Zuerst werden in einer Standard Dreihalskolbenapparatur 302 g Maleinsäureanhydrid, 28 g Wasser und 217 g Dicyclopentadien reagiert. Dann wird analog dem Beispiel 1 das Vorprodukt mit 161 g Neopentylglykol, 134 Trimethylolpropanmonoallylether und 157 g Hexanol bei 195°C reagiert. Das erhaltene Harz hat eine Säurezahl von 21 mg KOH/g und eine Viskosität von 22 Pas.

### Beispiel 3 Herstellung eines allylethermodifizierten ungesättigten Polyesterharzes 3

Zuerst werden in einer Standard Dreihalskolbenapparatur 271 g Maleinsäureanhydrid, 17 g Wasser und 130 g Dicyclopentadien reagiert. Dann wird analog dem Beispiel 1 das Vorprodukt mit 208 g Triethylenglykol, 48 g Neopentylglykol, 120 g 2-Ethylhexanol und 197 Trimethylolpropandiallylether bei 190°C reagiert. Das erhaltene Harz hat eine Säurezahl von 24 mg KOH/g und eine Viskosität von 12 Pas.

### Beispiel 4 Herstellung eines dicyclopentadienmodifizierten ungesättigten Polyesters (Komponente B)

Es wurde das Produkt aus Beispiel 1 der EP 1 122 282 hergestellt.

### Beispiel 5 Herstellung einer Imprägnierharzformulierung mit dem Harz 1

100 g Harz aus Beispiel 4, 790 g Harz aus Beispiel 1, 80 g Laromer PO 33F, 1 g Kobaltoctoat, 8,5 g einer handelsüblichen pyrogenen Kieselsäure, 0,5 g Di-tert. Butylphenol, 20 g tert. Butylperbenzoat werden intensiv gemischt. Die Formulierung hat eine Viskosität von 1050 mPas, eine Gelzeit von 3 Minuten bei 120°C. Mit der Formulierung werden Drillstäbe nach IEC 61033 (Methode A) getränkt und nach der Härtung (1 Stunde bei 160°C) wird die Verbackungsfestigkeit bestimmt. Sie beträgt bei 155°C 50 N. Außerdem wird mit der Formulierung ein Stator, Größe 90, getaucht und 1 Stunde bei 150°C gehärtet. Der Abtropfverlust während der Härtung im Ofen war außergewöhnlich gering. Der Stator wird danach zersägt und Harzaufnahme und Tränkqualität optisch begutachtet. Der Stator war einwandfrei imprägniert und die Wicklung satt mit Harz gesättigt.

### Beispiel 6 Herstellung einer Imprägnierharzformulierung mit dem Harz aus Beispiel 2

100 g Harz aus Beispiel 4, 800 g Harz aus Beispiel 2, 70 g Laromer PO 33F, 1 g Kobaltoctoat, 0,5 g 0,5 g Di-tert. Butylphenol, 20 g tert. Butylperbenzoat werden gemischt. Die Formulierung hat eine Viskosität von 1000 mPas, eine Gelzeit von 4 Minuten bei 120°C. Mit der Formulierung werden Drillstäbe nach IEC 61033 (Methode A) getränkt und nach der Härtung (1 Stunde bei 160°C) wird die Verbackungsfestigkeit bestimmt. Sie beträgt bei 155°C 65 N. Außerdem wird mit der Formulierung ein Stator, Größe 90, getaucht und 1 Stunde bei 150°C gehärtet. Der Stator wird danach zersägt und Harzaufnahme und Tränkqualität optisch begutachtet. Der Stator war einwandfrei imprägniert.

### Beispiel 7 Herstellung einer Imprägnierharzformulierung mit dem Harz 3

100 g Harz aus Beispiel 4, 800 g Harz aus Beispiel 3, 70 g Laromer PO 33F, 1 g Kobaltoctoat, 0,5 g Di-tert. Butylphenol, 20 g tert. Butylperbenzoat werden gemischt. Die Formulierung hat eine Viskosität von 1200 mPas, eine Gelzeit von 3 Minuten bei 120°C. Mit der Formulierung werden Drillstäbe nach IEC 61033 (Methode A) getränkt und nach der Härtung (1 Stunde bei 160°C) wird die Verbackungsfestigkeit bestimmt. Sie beträgt bei 155°C 51 N. Außerdem wird mit der Formulierung ein Stator, Größe 90, getaucht und 1 Stunde bei 150°C gehärtet. Der Stator wird danach zersägt und Harzaufnahme und Tränkqualität optisch begutachtet. Der Stator war einwandfrei imprägniert.

### Vergleichsbeispiel 8 Imprägnierung mit dem Harz aus Beispiel 4

Das Harz aus Beispiel 4 wird mit 2 % Dicumylperoxid aktiviert. Die Viskosität beträgt 8 Pas. Ein Stator der Größe 90 wird darin getaucht und 1 Stunde bei 160°C gehärtet. Der Stator wird danach zersägt und Harzaufnahme und Tränkqualität optisch begutachtet. Die Harzaufnahme ist deutlich geringer als die in den Beispielen 5 bis 7.

### Vergleichsbeispiel 9 Imprägnierung mit dem Harz aus Beispiel 1

Das Harz aus Beispiel 1 wird mit 3 % tert. Butylperbenzoat aktiviert. Die Viskosität beträgt 20 Pas. Ein Stator der Größe 90 wird darin getaucht und 1 Stunde bei 160°C gehärtet. Der Stator wird danach zersägt und Harzaufnahme und Tränkqualität optisch begutachtet. Die Harzaufnahme ist deutlich geringer als die in den Beispielen 5 bis 7.

### Vergleichsbeispiel 10 Imprägnierung mit dem ungesättigten Polymer

Laromer PO 33 F wird mit 2 % tert. Butylperbenzoat aktiviert und ein Stator der Baugröße 90 wird damit imprägniert und bei 130°C 1 Stunde gehärtet. Der Stator wird danach zersägt und Harzaufnahme und Tränkqualität optisch begutachtet. Das Harz platzt von den Wickelköpfen ab und reißt in der Wicklung.

## Patentansprüche

1. Niedrigviskose Tränkharzformulierung enthaltend
eine Komponente A, enthaltend ein allyletherhaltiges ungesättigtes Polyesterharz,
eine Komponente B, enthaltend ein dicyclopentadienterminiertes, von Komponente A verschiedenes, ungesättigtes Polyesterharz,
eine Komponente C, enthaltend ein weiteres von den Polyesterharzen gemäß Komponenten A und B verschiedenes, ungesättigtes Polymer,
sowie ggfs. Härtern, Beschleunigern, Stabilisatoren, Additiven und Rheologieadditiven,
wobei die Tränkharzformulierung eine Viskosität von kleiner oder gleich 1500 mPas gemessen bei 25°C aufweist.

2. Tränkharzformulierung nach Anspruch 1, **dadurch gekennzeichnet, daß** die Komponente A, 40 - 95 Gew.-% allyletherhaltiges ungesättigtes Polyesterharz bevorzugt 50,0 - 90 Gew.-%, besonders bevorzugt 60 - 80 Gew.-%,
die Komponente B 5,0 - 60 % dicyclopentadienterminiertes ungesättigtes Polyesterharz, bevorzugt 8,0 - 40 %, besonders bevorzugt 10 - 30% und die Komponente C 1,0 - 30% ungesättigtes Polymer bevorzugt 1,0 - 20%, besonders bevorzugt 1,0 - 10 %
enthalten, wobei die prozentualen Angaben jeweils auf die komplette Tränkharzformulierung bezogen sind.

3. Tränkharzformulierungen nach einem der vorhergehenden Ansprüche, **dadurch gekennzeichnet, daß** sie eine Viskosität von zwischen einschließlich 600 und einschließlich 1300 mPas und bevorzugt zwischen einschließlich 850 und einschließlich 1200 mPas, jeweils gemessen bei 25°C aufweisen.

4. Tränkharzformulierung nach einem der vorhergehenden Ansprüche, **dadurch gekennzeichnet, daß** ungesättigtes Polyesterharz in Komponente A Trimethylolpropanmono- und/oder Trimethylolpropandiallylether und/oder Pentaerythrittriallylether, sowie Glykolen, Polyolen und Carbonsäuren enthält.

5. Tränkharzformulierung nach einem der vorhergehenden Ansprüche, **dadurch gekennzeichnet, daß** das ungesättigte Polyesterharz in Komponente B Dicyclopentadienstrukturen, herstellbar durch die Addition von Maleinsäure und Dicyclopentadien, sowie Glykolen, Carbonsäuren und anderen aus der ungesättigten Polyesterharzchemie bekannten Komponenten, enthält.

6. Tränkharzformulierung nach einem der vorhergehenden Ansprüche, **dadurch gekennzeichnet, daß** das ungesättigte Polymer in Komponente C durch die Funktionalisierung bestehender Polymere mit Doppelbindungen enthaltenden Molekülen herstellbar ist.

7. Tränkharzformulierung nach einem der vorhergehenden Ansprüche, **dadurch gekennzeichnet, daß** die Komponenten A, B und C durch den Zusatz von Radikalbildnern zu duroplastischen Formstoffen aushärtbar sind.

8. Verwendung der Tränkharzformulierung nach Anspruch 1 bis 7 zum Imprägnieren von elektrischen Wicklungen.

9. Verwendung nach Anspruch 8 zum Imprägnieren von elektrischen Wicklungen durch Tauchen, Träufeln, Tauchrollieren, Vergießen, Vakuum- und/oder Vakuum-Druckimprägnierung gefolgt von einer thermischen Härtung.

10. Verwendung nach Anspruch 8 zum Imprägnieren von elektrischen Wicklungen durch Tauchen, Träufeln, Tauchrollieren, Vergießen, Vakuum- und/oder Vakuum-Druckimprägnierung gefolgt von einer UV-Härtung in Kombination mit einer thermischen Härtung.

11. Verwendung der Tränkharzformulierung nach Anspruch 1 bis 7 zur Herstellung von Basismaterialien von Flächenisolierstoffen.

12. Verwendung der Tränkharzformulierung nach Anspruch 1 bis 7 zum Überziehen von Flachbaugruppen in der Elektronik, Hybriden, SMD-Baugruppen und bestückten Leiterplatten.

## Claims

1. Low-viscosity impregnating resin formulation comprising
a component A comprising an unsaturated polyester resin containing allyl ether,
a component B comprising a dicyclopentadiene-terminated unsaturated polyester resin other than component A,
a component C comprising a further unsaturated polymer other than the polyester resins of components A and B,
and also, if desired, hardeners, accelerators, stabilizers, additives, and rheological additives,
the impregnating resin formulation having a viscosity of less than or equal to 1500 mPas measured at 25°C.

2. Impregnating resin formulation according to claim 1, **characterized in that** component A comprises 40%-95% by weight of unsaturated polyester resin containing allyl ether, preferably 50.0%-90% by weight, with particular preference 60%-80% by weight,
component B comprises 5.0%-60% of dicyclopentadiene-terminated unsaturated polyester resin, preferably 8.0%-40%, with particular preference 10%-30%, and
component C comprises 1.0%-30% of unsaturated polymer, preferably 1.0%-20%, with particular preference 1.0%-10%,
the percentages being based in each case on the complete impregnating resin formulation.

3. Impregnating resin formulations according to any one of the preceding claims, **characterized in that** they have a viscosity of between 600 (inclusive) and 1300 (inclusive) mPas, and preferably between 850 (inclusive) and 1200 (inclusive) mPas, in each case measured at 25°C.

4. Impregnating resin formulation according to any one of the preceding claims, **characterized in that** unsaturated polyester resin in component A comprises trimethylolpropane monoallyl ether and/or trimethylolpropane diallyl ether and/or pentaerythritol triallyl ether, and also glycols, polyols, and carboxylic acids.

5. Impregnating resin formulation according to any one of the preceding claims, **characterized in that** the unsaturated polyester resin in component B comprises dicyclopentadiene structures, preparable by the addition reaction of maleic acid and dicyclopentadiene, and also glycols, carboxylic acids, and other components known from unsaturated polyester resin chemistry.

6. Impregnating resin formulation according to any one of the preceding claims, **characterized in that** the unsaturated polymer in component C is preparable by the functionalization of existing polymers with molecules containing double bonds.

7. Impregnating resin formulation according to any one of the preceding claims, **characterized in that** components A, B, and C are curable through the addition of free-radical initiators to thermoset molding materials.

8. Use of the impregnating resin formulation according to claim 1 to 7 for impregnating electrical windings.

9. Use according to claim 8 for impregnating electrical windings by dipping, trickling, dip-rolling, casting, vacuum impregnation and/or vacuum-pressure impregnation, followed by thermal curing.

10. Use according to claim 8 for impregnating electrical windings by dipping, trickling, dip-rolling, casting, vacuum impregnation and/or vacuum-pressure impregnation, followed by UV curing in combination with thermocuring.

11. Use of the impregnating resin formulation according to claim 1 to 7 for producing base materials of sheet insulating materials.

12. Use of the impregnating resin formulation according to claim 1 to 7 for coating flat modules in electronics, hybrids, SMD modules, and assembled printed circuit boards.

## Revendications

1. Composition de résine d'imprégnation peu visqueuse, contenant
un composant A qui contient une résine polyester insaturée contenant un éther allylique,
un composant B qui contient une résine polyester insaturée différente du composant A, à terminaison dicyclopentadiène,
un composant C qui contient un autre polymère insaturé, différent des résines polyester selon les composants A et B,
ainsi qu'éventuellement des durcisseurs, des accélérateurs, des stabilisants, des additifs et des additifs de rhéologie,
la composition de résine d'imprégnation ayant une viscosité inférieure ou égale à 1 500 mPa.s, mesurée à 25 °C.

2. Composition de résine d'imprégnation selon la revendication 1, **caractérisée en ce que**
le composant A contient 40 - 95 % en poids, de préférence 50,0 - 90 % en poids, de façon particulièrement préférée 60 - 80 % en poids de résine polyester insaturée contenant un éther allylique,
le composant B contient 5,0 - 60 %, de préférence 8,0 - 40 %, de façon particulièrement préférée 10 - 30 % de résine polyester insaturée à terminaison dicyclopentadiène et
le composant C contient 1,0 - 30 %, de préférence 1,0 - 20 %, de façon particulièrement préférée 1,0 - 10 % de polymère insaturé,
les pourcentages étant chacun par rapport à la composition totale de résine d'imprégnation.

3. Compositions de résines d'imprégnation selon l'une quelconque des revendications précédentes, **caractérisées en ce qu'**elles présentent une viscosité comprise entre 600 et 1 300 mPa.s, limites incluses, et de préférence entre 850 et 1 200 mPa.s, limites incluses, mesurée chaque fois à 25 °C.

4. Composition de résine d'imprégnation selon l'une quelconque des revendications précédentes, **caractérisée en ce que** la résine polyester insaturée contient dans le composant A de l'éther monoallylique et/ou de l'éther diallylique de triméthylolpropane et/ou de l'éther triallylique de pentaérythritol, ainsi que des glycols, des polyols et des acides carboxyliques.

5. Composition de résine d'imprégnation selon l'une quelconque des revendications précédentes, **caractérisée en ce que** la résine polyester insaturée contient dans le composant B des structures dicyclopentadiène pouvant être préparées par l'addition d'acide maléique et de dicyclopentadiène, ainsi que des glycols, des acides carboxyliques et d'autres composants connus d'après la chimie des résines polyester insaturées.

6. Composition de résine d'imprégnation selon l'une quelconque des revendications précédentes, **caractérisée en ce que** le polymère insaturé dans le composant C peut être préparé par la fonctionnalisation de polymères existants avec des molécules comportant des doubles liaisons.

7. Composition de résine d'imprégnation selon l'une quelconque des revendications précédentes, **caractérisée en ce que** les composants A, B et C sont durcissables par l'addition de générateurs de radicaux à des matières à mouler thermodurcissables.

8. Utilisation de la composition de résine d'imprégnation selon l'une quelconque des revendications 1 à 7, pour l'imprégnation de bobinages électriques.

9. Utilisation selon la revendication 8, pour l'imprégnation de bobinages électriques par immersion, instillation, enduction au rouleau demi-immergé, coulée, imprégnation sous vide et/ou sous pression sous vide, suivie d'un durcissement thermique.

10. Utilisation selon la revendication 8, pour l'imprégnation de bobinages électriques par immersion, instillation, enduction au rouleau demi-immergé, coulée, imprégnation sous vide et/ou sous pression sous vide, suivie d'un durcissement aux UV en combinaison avec un durcissement thermique.

11. Utilisation de la composition de résine d'imprégnation selon l'une quelconque des revendications 1 à 7, pour la production de matériaux de base d'isolants de surface.

12. Utilisation de la composition de résine d'imprégnation selon l'une quelconque des revendications 1 à 7, pour le revêtement de cartes à circuits imprimés en électronique, de cartes hybrides, d'ensembles de montage en surface SMD et de plaquettes à circuits imprimés équipées.
